# EUROPEAN PATENT APPLICATION

(11) **EP 1 721 808 A1**
(43) Date of publication of application: **15.11.2006**
(21) Application number: 05719088.6
(22) Date of filing: 14.02.2005
(51) Int. Cl.: B62D 21/14, B62D 63/02, B62K 5/00, B62K 15/00

(54) **VARIABLE WHEELBASE TYPE VEHICLE**

(30) Priority: 17.02.2004 JP 2004040363
(71) Applicant: TOYOTA SHATAI KABUSHIKI KAISHA, Kariya-shi, Aichi 448-8666 (JP); Toyota Motor Corporation, Toyota-shi, Aichi 471-8571 (JP)
(72) Inventor: NAKAIZUMI, Yasushi, c/o TOYOTA SHATAI K.K., Kariya-shi, Aichi 448-8666 (JP); KAYUKAWA, Hiroshi, c/o TOYOTA MOTOR CORPORATION, Toyota-shi, Aichi 471-8571 (JP)
(74) Representative: Winter, Brandl, Fürniss, Hübner Röss, Kaiser, Polte Partnerschaft Patent- und Rechtsanwaltskanzlei
(86) International application number: PCT/JP2005/002141
(87) International publication number: WO 2005/077736

(57) **Abstract**

[Problem to be Solved] A vehicle having an adjustable wheel base is provided with a linking mechanism that links a change in the wheel base to the inclination of the vehicle seat.

[Means for Solving the Problem] The front wheels FW of the vehicle 1 having an adjustable wheel base are joined to the front portion of a main frame 2, on which a vehicle seat SV is mounted. The upper ends of a pair of rotating arms 4 are rotatably joined to locations of the main frame 2 farther toward the rear than the front portion. The lower ends of the rotating arms 4 are rotatably joined to the rear wheels RW, and the upper arms 8 and the lower arm 73 are provided rotatably connected together such that the main frame 2 and the rear wheels RW are joined at the back of the rotating arms 4. The operating portion 62 of the operating apparatus 6, on which the main frame 2 is installed, is joined via the operating links 5 to the rotating arms 4, and by operating the operating apparatus 6, the rotating arms 4 are rotated by the operating links 5, the rear wheels RW are moved with respect to the front wheels FW, the wheel base is changed, and simultaneously, the inclination of the main frame 2 is changed.

## Description

The present invention relates to a vehicle having an adjustable wheel base that enables the changing of the inclination of a vehicle seat in cooperation with a change in the wheel base.

There is conventional technology related to vehicles that enables the changing of a wheel base (the distance between the center of a front wheel and that of a rear wheel) depending on the traveling conditions thereof (for example, refer to Patent Document 1). In this vehicle, the rear vehicle axle is moved longitudinally by using an actuator that is attached to the vehicle frame. However, a vehicle can be considered from the point of view of vehicle stability when traveling at a high speed in which, in addition to this structure, the inclination of the vehicle seat is changed in cooperation with a change of the wheel base. Up until the present, however, there has been no proposal related to a specific structure for linking the change in the wheel base with the inclination of the vehicle seat.
[Patent Document 1] Japanese Patent Application Publication No. JP-A-1-106717 (FIG. 1 and FIG. 2)

### Problems to be Solved by the Invention

The present invention has been completed in view of the circumstances described above. It is an object of the present invention to provide a vehicle that has an adjustable wheel base and that is provided with a linking mechanism that links a change in the wheel base with the inclination of the vehicle seat.

### Means for Solving the Problem

As a device for attaining the object described above, the present invention according to aspect 1 is provided with a main frame extending toward the rear that has a vehicle seat provided thereon and a front portion thereof joined to the front wheels, rotating arms having upper ends and lower ends, the upper ends being rotatably connected to locations of the main frame positioned farther toward the rear than the locations of the main frame that are connected to the front wheels, and the lower ends being joined to rear wheels, and an operating apparatus having an installation portion that is joined to the main frame and an operating portion that is interposed between the installation portion and the rotating arms and that can move with respect to the installation portion. The device is characterized in that the rear wheels are moved in a longitudinal direction with respect to the front wheels due to the driving of the operating apparatus urging and rotating the rotating arms, centered about portions that are joined to the main frame. Simultaneously, the inclination of the main frame is changed and the inclination of the vehicle seat is changed in cooperation with the change in the wheel base.

The invention according to aspect 2 is a vehicle having an adjustable wheel base as in aspect 1, characterized in that respective operating links are structured by a pair of sub-links that have one end rotatably connected together. Both ends of these operating links are respectively rotatably installed on the rotating arms and the main frame. The operating portion of the operating apparatus is joined to a portion where the pair of sub-links is connected together.

The invention according to aspect 3 is a vehicle having an adjustable wheel base as in aspect 2, characterized in that the operating links are disposed on the outside of the main frame in the transverse direction so as to avoid the main frame in the transverse direction thereof when the pair of sub-links are connected together. Simultaneously, these operating links are joined together in the transverse direction of the vehicle at the portion where the sub-links are joined together by the operating portion of the operating apparatus.

The invention according to aspect 4 is a vehicle having an adjustable wheel base as in one of aspect 2 and aspect 3, characterized in that the operating portion of the operating apparatus is structured by a male screw member that is threaded on the outer circumferential surface thereof and that is rotated by an electric motor, and a female screw that has the male screw member threaded therein, that is connected to the operating link so as to be unable to rotate, and that moves linearly thereon due to the rotating of the male screw member.

The invention according to aspect 5 is a vehicle having an adjustable wheel base as in any one of aspect 1 to aspect 4, characterized in that the lower ends of the upper arms and the upper ends of the lower arms have been rotatably joined together. Subsequently the upper ends of the upper arms are connected to locations of the main frame that are positioned farther toward the rear than the locations of the main frame that are joined to the rotating arms. The lower ends of the lower arms are connected to the rear wheels, and one from among either the upper arms or the lower arms is rotatably linked to the main frame or the rear wheels.

### Effects of the Invention

### <Invention according to aspect 1>

By using a structure in which the drive of the operating apparatus urges and rotates the rotating arms, centered about the portions that are connected to the main frame, the rear wheels are moved in a longitudinal direction with respect to the front wheels. At the same time, the inclination of the main frame is changed and the inclination of the vehicle seat is changed in cooperation with the change in the wheel base. It is possible thereby to adjust the size of the wheel base and the inclination of the vehicle seat to a state that is appropriate for the traveling conditions by using a simple structure. In addition, by selecting a position urged by the operating portion in a vertical direction from among the parts of the rotating arms, it is possible to easily adjust the amount of movement of the rear wheels and the amount of the inclination of the vehicle seat with respect to the amount of operation of the operating apparatus. In addition, it is possible to realize a vehicle having an adjustable wheel base that is small and provides for freedom of design.

### <Invention according to aspect 2>

Because the operating apparatus is connected to the rotating arms via the operating links, the operating portion of the operating apparatus does not pivot significantly due to the operation thereof, and it is possible to prevent interference by the main frame. Additionally, the amount of movement of the operating portion can be reduced, and it is possible to increase the freedom of design in the layout of each of the mechanisms.

### <Invention according to aspect 3>

It is possible to sufficiently operate the operating apparatus because the operating links are disposed on the outside of the main frame in the transverse direction so as to avoid the main frame in the transverse direction when the pair of sub-links are connected together, and these operating links are connected to the vehicle in the transverse direction at the portion where these sub-links are connected together by the operating portion of the operating apparatus. And at the same time, it is possible to significantly increase the freedom of design because the rotating arms are rotated without the main frame interfering with the operating links.

### <Invention according to aspect 4>

It is possible to realize an operating apparatus that is quiet and has little vibration because the operating portion of the operating apparatus is configured by a male screw member that is threaded on the outer circumferential surface thereof and that is rotated by an electric motor, and a female screw member that has the male screw member threaded therein, which is rotatably connected to the operating link, and that moves linearly thereon due to the rotation of the male screw member.

### <Invention according to aspect 5>

Since the lower ends of the upper arms and the upper ends of the lower arms are rotatably connected, and subsequently the upper ends of the upper arms are connected to locations of the main frame positioned farther toward the rear than the locations of the main frame that are connected to the rotating arms, the lower ends of the lower arms are connected to the rear wheels, and one of the upper arms or the lower arms are rotatably connected to the main frame and the rear wheels, it is possible to prevent vibration from occurring in the main frame while the vehicle is traveling because the upper arms and the lower arms support the main frame along with the rotating arms. In addition, it is possible to decrease the load burden on the rotating arms.

FIG. 1 is a frontal perspective view of the vehicle having an adjustable wheel base according to the illustrative example.
FIG. 2 is an exploded perspective view of FIG. 1 showing the necessary parts.
FIG. 3 is a simplified side view showing the state of the vehicle having an adjustable wheel base shown in FIG. 1 when the wheel base is small.
FIG. 4 is a drawing showing the state of the vehicle having an adjustable wheel base shown in FIG. 3 when the wheel base is large.
FIG. 5 is a drawing showing the operating condition of a vehicle having an adjustable wheel base when an operating link is not used.

- 1: VEHICLE HAVING AN ADJUSTABLE WHEEL BASE
- 2: MAIN FRAME
- 4: ROTATING ARM
- 5: OPERATING LINK
- 6: OPERATING APPARATUS
- 8: UPPER ARM
- 51: FIRST SUB-LINK
- 52: SECOND SUB-LINK
- 61: INSTALLATION PORTION
- 62: OPERATING PORTION
- 62A: MALE SCREW MEMBER
- 62B: NUT
- 72: LOWER ARM
- FW: FRONT WHEELS
- RW: REAR WHEELS
- SV: VEHICLE SEAT

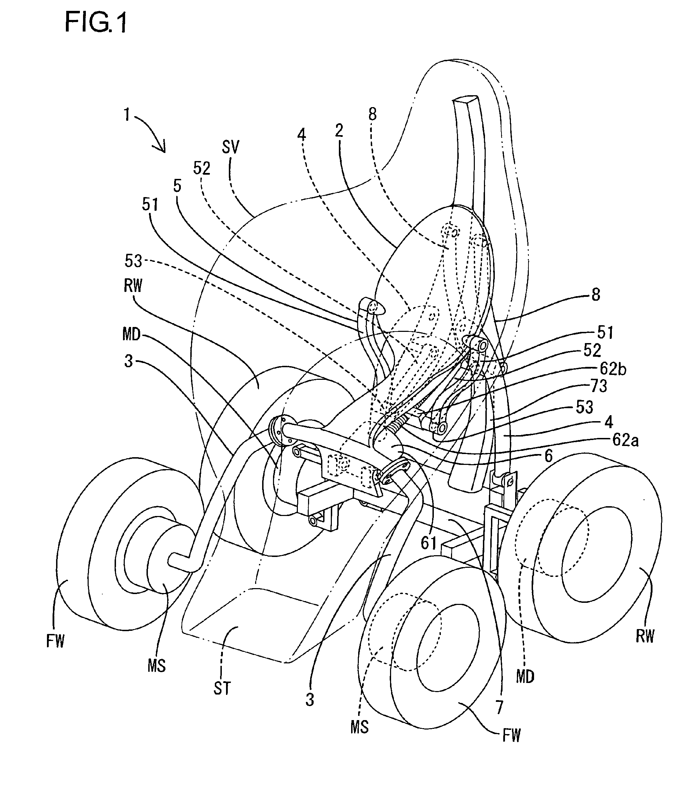

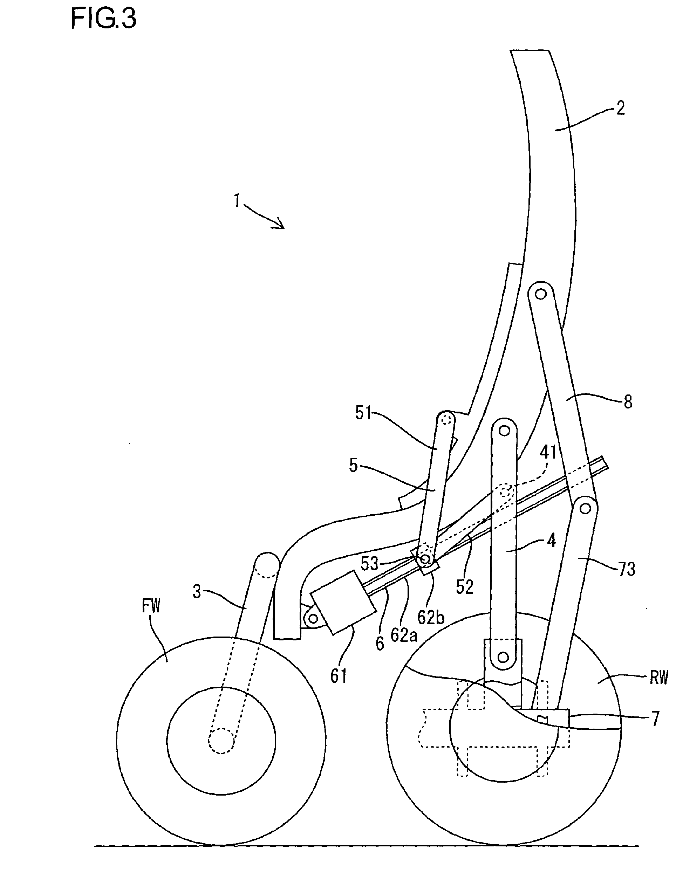

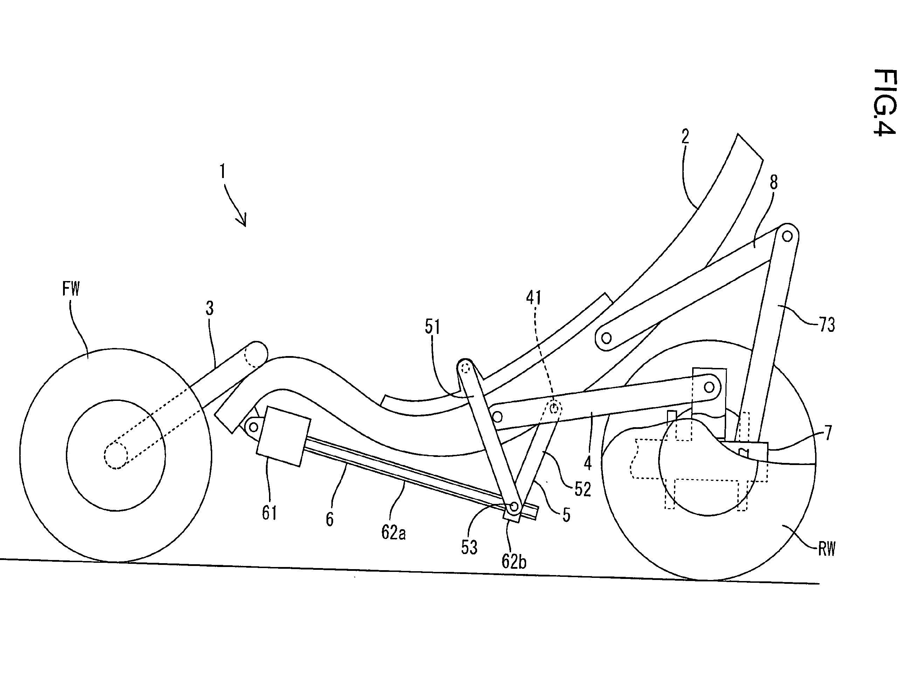

An illustrative example of the present invention is explained with reference to FIG. 1 through FIG. 4. For the following explanation, in FIG. 3 and FIG. 4, the left side is the front of the vehicle 1. The vehicle 1 having an adjustable wheel base is provided with a main frame 2. The main frame 2 is integrally formed by aluminum casting and extends in a longitudinal direction. A cavity shaped seat mounting portion 21, in which the vehicle seat SV is mounted, is formed at the center portion of the main frame 2. A frame structure 22 is formed on the back surface of the seat mounting portion 21, extends so as to curve in a vertical direction with respect to the seat mounting portion 21, and supports the vehicle seat SV. The vehicle seat SV is formed in a shape that accommodates and supports the body of a seated driver and a step ST is provided on a lower end portion thereof for a seated driver to use during ingress and egress (shown in FIG. 1).

On the front portion of the main frame 2, a pair of left and right arm installation portions 22a, to which the suspension arms 3 are joined by a bolt, rivet, or the like, is provided facing the outside of the vehicle 1 in the transverse direction. The suspension arms 3 are formed by a flexible metallic material, and on the distal end portions thereof, the front wheels FW are each joined via electric motors MS for steering. The electric motors MS are electrically connected to a vehicle battery (not illustrated), and are for steering the front wheels FW when necessary.

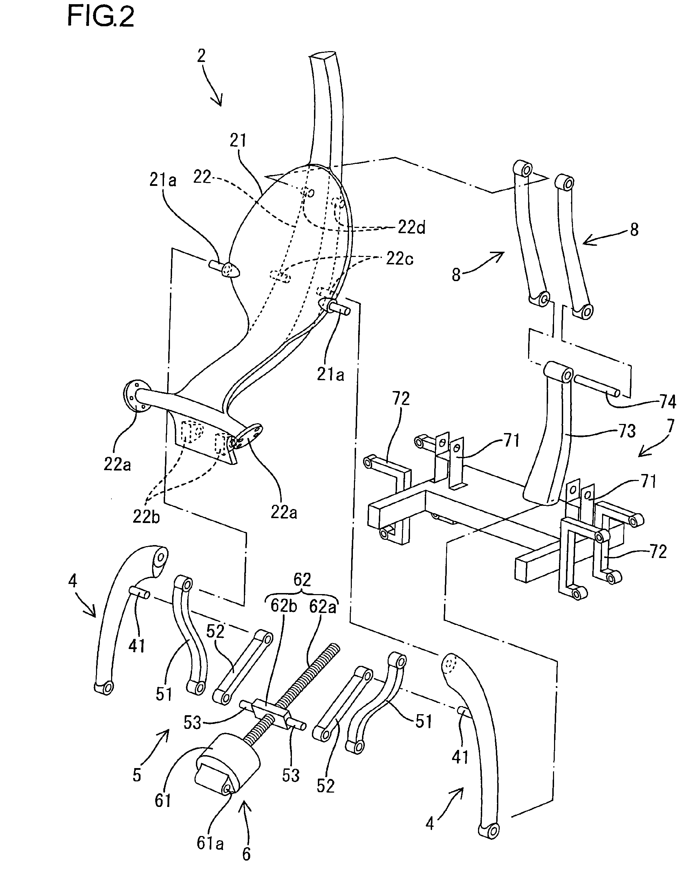

As shown in FIG. 2, on the back surface of the front end portion of the main frame 2, a pair of operating apparatus installation portions 22b is provided so as to project toward the rear. The members of the pair of operating apparatus installation portions 22b face each other, and the operating apparatus 6, described below, is installed there between. In addition, on the side portions of the seat mounting portion 21, a pair of cylindrical sub-link installation portions 21a projects toward the outside in the transverse direction. Additionally, on the side surfaces of the frame structure 22 as well, a pair of rotating arm installation portions 22c is formed similarly to the sub-link installation portions 21a. Furthermore, farther to the rear (upward) than the rotating arm installation portions 22c, upper arm installation portions 22d, which have a shape corresponding to that of the rotating arm installation portions 22c, project toward the outside in the transverse direction.

The rotating arm installation portions 22c, which are positioned farther toward the rear than the portion that joins to the front wheels FW, are inserted into the upper ends of the pair of left and right rotating arms 4. The rotating arms 4 are thereby rotatably installed on the main frame 2. In addition, the sub-link installation portions 21a, which are formed on side portions of the seat mounting portion 21, are rotatably inserted into the upper ends of the pair of first sub-links 51, which form the operating links 5. In addition, after inserting one end of a joining shaft 53, which also forms the operating links 5, through one end of a rectilinear second sub-link 52 and then through the lower end of the first sub-link 51, the lower end of the first sub-link 51 and the one end of the second sub-link 52 are rotatably connected together. Thereby, the first sub-link 51 and the second sub-link 52 form what is called an adjustable angle link mechanism.

Cylindrical projecting link installation portions 41 are formed on the inside surface of each of the mutually opposing rotating arms 4, and they are rotatably inserted into the other end of the second sub-links 52 from the inside. As shown in FIG. 1, a mutually opposing pair of sub-links 51 and 52 are disposed on the outside (both sides) of the main frame 2 in the transverse direction so as to avoid the main frame 2 in the transverse direction thereof when connected together, and as will be described below. The sub-links 51 and 52 are connected to the vehicle 1 in the transverse direction by the nut 62b of the operating apparatus 6, being connected to the other ends of the pair of joining shafts 53, and thereby forming the operating links 5.

The operating apparatus 6 is configured by a substantially cylindrically formed installation portion 61 and an operating portion 62, which is connected to the installation portion 61 by a built-in electric motor (not illustrated). A rotating shaft (not illustrated) is inserted into an installation hole 61a provided at an end portion of the installation portion 61. The ends of the rotating shaft are inserted into the operating apparatus installation portion 22b of the main frame 2 described above, and the installation portion 61 is disposed so as to be interposed between the pair of operating apparatus installation portions 22b. The installation portion 61 is thereby installed so as to be able to pivot in the vertical direction. The electric motor built into the installation portion 61 is electrically connected to a vehicle battery and can be driven by manipulating an operating switch.

The operating portion 62 is configured by a male screw member 62a and a rectangular shaped nut 62b. The male screw member 61a extends in a shaft-shape, is threaded on the outer circumferential surface thereof, and is able to rotate by being connected to the rotating axle of the electric motor built into the installation portion 61 via a reduction gear. The rectangular shaped nut 62b has a female screw portion formed therein and the male screw member 62a is threaded therein. The nut 62b corresponds to a female screw member of the present invention, and by connecting the mutually opposing pair of joining shafts 53 of the operating links 5 described above, the connecting portions of the sets of the sub-links 51 and 52 are joined together. In this manner, the nut 62b is connected to the operating links 5 and is unable to rotate. Therefore, the operating portion 62 of the operating apparatus 6 is interposed between the installation portion 61 and the rotating arms 4 and is able to move with respect to the installation portion 61.

The lower ends of each of the rotating arms 4 are rotatably linked to arm joining portions 71, which are formed on the upper surface of a frame 7 for the drive units. Motor carriers 72, on which the electric motors MD for driving the rear wheels are installed, are formed on the side surface portions of the frame 7 for the drive units. The frame 7 for the drive units is joined to the rear wheels RW via the electric motors MD that are installed in the motor carriers 72. Therefore, the lower ends of the rotating arms 4 are also connected to the rear wheels RW. The electric motors MD, like the electric motors MS for steering and the electric motor of the operating apparatus 6, are electrically connected to a vehicle battery. A vehicle battery, a regulating controller, and a rear wheel axle and the like (none illustrated) are mounted on the frame 7 for the drive units.

In addition, on the rear end portion of the upper surface of the frame 7 for the drive units, one lower arm 73 is integrally formed (stationary), and extends substantially upward. Therefore, the lower end of the lower arm 73 is also connected to the rear wheels RW. A rotating axle 74 passes through the upper end of the lower arm 73. The end portions of the rotating axle 74 are inserted into a pair of left and right upper arms 8, which are thereby rotatably connected to the lower arm 73. Upper arm installation portions 22d, formed on the side surfaces of the frame structure 22 described above, are inserted into the upper ends of each of the upper arms 8. The upper arms 8 are thereby rotatably connected to the main frame 2. While the rotating arms 4, the sub-links 51 and 52, and the upper arms 8 described above are not limited thereby, in the illustrative example, each is integrally formed by aluminum metal.

Next, with reference to FIG. 3 and FIG. 4, the operating method used when changing the wheel base of the vehicle 1 having an adjustable wheel base will be explained. As shown in FIG. 3, the vehicle 1 travels at a low speed after making the wheel base as small as possible. When the driver of the vehicle wishes to run the vehicle 1 at a high speed, by manipulating an operating switch (not illustrated) of the vehicle 1, the electric motor of the operating apparatus 6 is driven and the rotation is transferred to the male screw member 62a via the reduction gear. Since the nut 62b, into which the male screw member 62a is threaded, cannot rotate, the nut 62b is moved rectilinearly toward the rear of the vehicle 1 due to the rotation of the male screw member 62a.

The first sub-links 51 rotate counterclockwise in FIG. 3, centered about the upper ends thereof due to the movement of the nut 62b, because the portion that connects the first sub-links 51 together with the second sub-links 52 is connected to the nut 62b via the joining shafts 53. Since the lower ends of the first sub-links 51 rotate toward the rear, the pair of second sub-links 52 pivots toward the rear and urges the rotating arms 4 toward the rear. Thereby, the rotating arms 4 rotate counterclockwise in FIG. 3, centered about the portion of the upper ends that are connected to the main frame 2, and become substantially horizontal. Due to the rotation of the rotating arms 4, the rear wheels RW are moved toward the rear with respect to the front wheels FW, the wheel base becomes the largest, and simultaneously, the main frame 2 inclines so as to come to rest towards the rear (refer to FIG. 4). As described above, because the operating apparatus 6 is installed so as to be able to pivot vertically on the main frame 2, the movement of the nut 62b is able to follow the path of the lower ends of the first sub-links 51 and does not hinder the rotation thereof.

In addition, when the rear wheels RW move toward the rear, because the lower arm 73 also moves toward the rear, the pair of upper arms 8 rotates counterclockwise in FIG. 3, centered about the upper ends thereof that are linked to the main frame 2, and become substantially horizontal. Due to the inclination of the main frame 2 toward the rear, the vehicle seat SV that is installed thereon also inclines toward the rear along with the driver. The center of gravity of the vehicle 1 is lowered. The forward stability of the vehicle 1 can thereby be increased, and it is possible to dispose the vehicle 1 in a state that is suitable for high-speed travel.

As shown in FIG. 4, when returning to a state of low-speed travel, in which the wheel base is reduced, from the state of high-speed travel, in which the wheel base of the vehicle 1 is increased, the electric motor of the operating apparatus 6 is driven in the opposite direction to the direction described above by the driver manipulating the operation switch of the vehicle 1. Thereby, the male screw member 62a rotates in the opposite direction and the nut 62b is moved towards the front of the vehicle 1. Thus, the first sub-links 51 rotate clockwise in FIG. 4, centered about the upper ends thereof, and the second sub-links 52 pivot forward. Therefore, due to the urging of the second sub-links 52, the rotating arms 4 are rotated clockwise in FIG. 4, centered about the portions of the upper ends that are connected to the main frame 2, and become substantially vertical. The rear wheels RW move forward and the wheel base is reduced. Simultaneously, the main frame 2 rises toward the front.

In addition, when the rear wheels RW move forward, the pair of upper arms 8 rotate clockwise in FIG.4, centered about the upper ends that are joined to the main frame 2, because the lower arm 73 moves forward in a direction opposite to the direction when the wheel base is increased. Since the main frame 2 rises toward the front, the vehicle seat SV that is installed thereon also rises forward. It is thereby possible to improve the visual field of the driver, and it is possible to enhance the ease of the driver's ingress into and egress out of the vehicle 1.

This illustrative example is configured such that the driving of the operating apparatus 6 urges and rotates the rotating arms 4, centered about the portions joined to the main frame 2. Thereby, the rear wheels RW are moved in a longitudinal direction with respect to the front wheels FW, the inclination of the main frame 2 is changed, and the inclination of the vehicle seat SV is changed in cooperation with the change of the wheel base. Thus, by using a simple structure, it is possible to adjust the size of the wheel base and the inclination of the vehicle seat SV so as to be appropriate for the traveling conditions. In addition, by selecting the vertical position (the position at which the link installation portion 41 is formed) on the parts of the rotating arms 4 that are linked to the operating portion 62 via the operating links 5, which is the location that is urged by the operating portion 62, it is possible to adjust the amount of the movement of the rear wheels RW and the amount of the inclination of the vehicle seat SV with respect to the operating amount of the operating apparatus 6. It is possible thereby to provide a vehicle 1 having an adjustable wheel base that is small and provides for freedom of design.

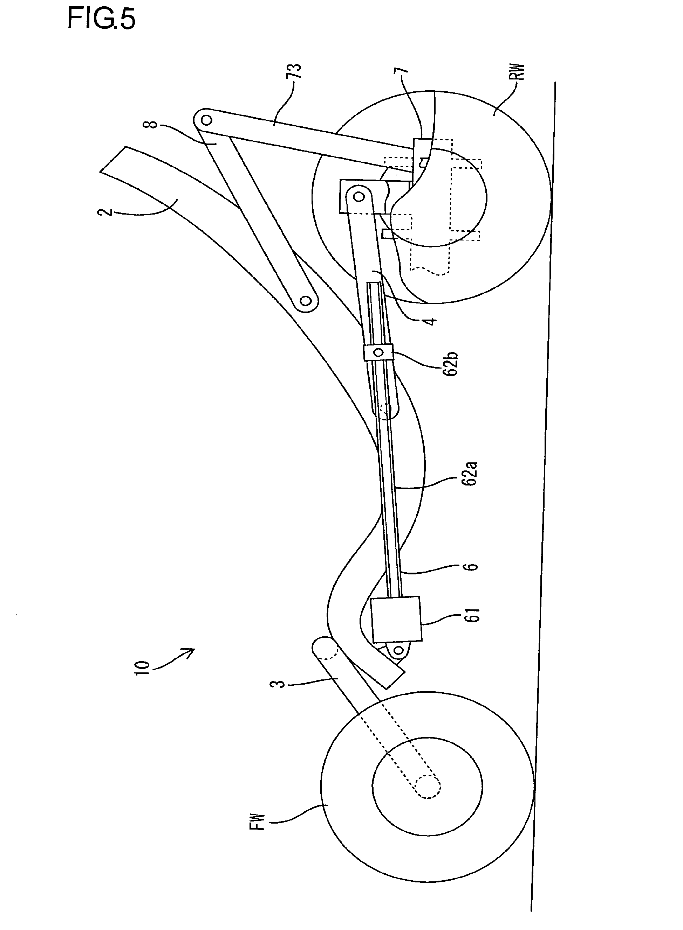

In addition, as shown in FIG. 5, in the case of a vehicle 10 in which there are no operating links 5 interposed between the rotating arms 4 and the operating apparatus 6, when the rear wheels RW are moved to a position identical to that shown in FIG. 4 by operating the operating apparatus 6, the back surface of the main frame 2 interferes with the male screw member 62a of the operating apparatus 6. Thus it would not be possible to secure a wheel base having the same size. In order to avoid interference between the male screw member 62a and the main frame 2, if the operating apparatus 6 is installed lower on the vehicle 1, the movement distance of the nut 62b becomes extremely large, the freedom of design is thereby decreased, and new problems occur that are related to the strength of the male screw member 62a.

However, in this illustrative example, because the operating apparatus 6 is connected to the rotating arms 4 via the operating links 5, the operating portion 61 of the operating apparatus 6 does not pivot significantly upward due to the operation thereof, the installation position of the operating apparatus 6 is not particularly limited, and it is possible to prevent interference between the operating portion 62 and the main frame 2. In addition, it is possible to make the movement distance of the nut 62b small, and it is possible to make the freedom of design large in the layout of each mechanism.

Because a set of operating links 5 is disposed outside of the main frame 2 in the transverse direction, so as to avoid the main frame 2 in the transverse direction when the pair of sub-links 51 and 52 are joined together, the operating links 5 are joined to the vehicle 1 in the transverse direction at the portion where these sub-links 51 and 52 are connected together by the nut 62b, and rotating arms 4 are rotated without the main frame 2 interfering with the operating links 5, it is possible to sufficiently operate the operating apparatus 6, and it is possible to significantly increase the freedom of design.

In addition, an operating apparatus 6 is realized that is quiet and has little vibration because the operating portion 62 of the operating apparatus 6 is structured by a male screw member 62a that is threaded on the outer circumferential surface thereof and that is rotated by the electric motor, and a nut 62b that has the male screw member 62a threaded therein, which is connected to the operating link 5 so as not to rotate, and which moves linearly thereon due to the rotating of the male screw member 62a.

Furthermore, because the lower ends of the upper arms 8 and the upper end of the lower arm 72 are rotatably linked together, and subsequently the upper ends of the upper arms 8 are rotatably connected to locations positioned farther to the rear than the portions of the main frame 2 that are connected to the rotating arms 4, and the lower end of the lower arm 73 is connected to the rear wheels RW, the upper arms 8 and the lower arm 73 support the main frame 2 along with the rotating arms 4, it is possible to prevent the occurrence of vibration in the main frame 2 while the vehicle 1 is traveling. In addition, it is possible to lower the load burden on the rotating arms 4.

### Other illustrative examples

The present invention is not limited to the illustrative examples as explained by the disclosures and the figures. For example, the following illustrative examples fall within the technical scope of the present invention. Furthermore, in addition to the following disclosures, the present invention can be implemented by various modifications within a scope that does not depart from the spirit of the invention.
(1) With respect to the upper arms and the lower arms, the upper ends of the upper arms may be rotatably linked to the main frame and the lower ends of the lower arms may be rotatably linked to the rear wheels.
(2) The operating apparatus of the present invention may employ hydraulic or pneumatic pressure, or may employ an electromagnetic actuator or the like.
(3) The vehicle may automatically detect the traveling speed thereof, and when the traveling speed is equal to or greater than a predetermined speed, the wheel base may be increased by operating the operating apparatus, and when the traveling speed is less than a predetermined speed, the wheel base may be reduced.
(4) Between the maximum and minimum states of the wheel base, the vehicle may be able to travel with the front and rear wheels locked in one of a plurality of intermediate states.
(5) The present invention may be applied to a vehicle in which a plurality of vehicle seats are arranged in the longitudinal direction or the transverse direction, and a plurality of people may simultaneously ride in the vehicle.

## Claims

1. A vehicle having an adjustable wheel base, comprising:
a main frame extending toward the rear that is provided with a vehicle seat and has a front portion joined to front wheels;
rotating arms having upper ends and lower ends, said upper ends being rotatably connected to locations of said main frame positioned farther toward the rear than locations of said main frame that are connected to said front wheels, and said lower ends being joined to rear wheels; and
an operating apparatus having an installation portion that is joined to said main frame, and an operating portion that is interposed between said installation portion and said rotating arms and that can move with respect to said installation portion,
**characterized in that**:
said rear wheels are moved in a longitudinal direction with respect to said front wheels due to the drive of said operating apparatus urging and rotating said rotating arms centered on portions that are joined to said main frame, and at the same time, the inclination of said main frame is changed, and the inclination of said vehicle seat is changed in cooperation with the change in said wheel base.

2. The vehicle having an adjustable wheel base according to claim 1, **characterized in that** respective operating links are structured by a pair of sub-links that have one end rotatably connected together, both ends of said operating links are respectively rotatably installed on said rotating arms and said main frame, and said operating portion of said operating apparatus is joined to the portion that connects said pair of sub-links together.

3. The vehicle having an adjustable wheel base according to claim 2, **characterized in that** said operating links are disposed on the outside of said main frame in the transverse direction so as to avoid said main frame in its transverse direction when said pair of sub-links are connected together, and at the same time, said operating links are joined together in the transverse direction of the vehicle at the portion where said sub-links are joined together by said operating portion of said operating apparatus.

4. The vehicle having an adjustable wheel base according to one of claim 2 and claim 3, **characterized in that** said operating portion of said operating apparatus is structured by a male screw member that is threaded on the outer circumferential surface and that is rotated by an electric motor, and a female screw member that has said male screw member threaded in said female screw member, that is connected to said operating link so as to be unable to rotate, and that moves linearly on said mail screw member due to said male screw member rotating.

5. The vehicle having an adjustable wheel base according to any one of claim 1 to claim 4, **characterized in that** the lower ends of upper arms and the upper ends of lower arms have been rotatably joined together, and subsequently the upper ends of said upper arms are connected to locations of said main frame that are positioned farther toward the rear than the locations of said main frame that are joined to said rotating arms, the lower ends of said lower arms are connected to said rear wheels, and one of said upper arms and said lower arms is rotatably connected to said main frame or the rear wheels.

## Amended claims

### Amended claims under Art. 19.1 PCT

**1.** (Amended) A vehicle having an adjustable wheel base, comprising:
a main frame extending toward the rear that is provided with a vehicle seat and has a front portion joined to front wheels;
rotating arms having upper ends and lower ends, said upper ends being rotatably connected to locations of said main frame positioned farther toward the rear than locations of said main frame that are connected to said front wheels, and said lower ends being joined to rear wheels; and
an operating apparatus having an installation portion that is linked to said main frame, and an operating portion that is interposed between said installation portion and said rotating arms and that can move with respect to said installation portion,
**characterized in that**:
said rear wheels are moved in a longitudinal direction with respect to said front wheels due to the drive of said operating apparatus urging a position between the upper and lower ends of said rotating arms and rotating said rotating arms centered on portions that are joined to said main frame, and at the same time, the inclination of said main frame is changed, and the inclination of said vehicle seat is changed in cooperation with a change in the wheel base.

**2.** The vehicle having an adjustable wheel base according to claim 1, **characterized in that** respective operating links are configured by a pair of sub-links that have one end rotatably connected together, both ends of said operating links are respectively rotatably installed on said rotating arms and said main frame, and said operating portion of said operating apparatus is joined to a portion that connects said pair of sub-links together.

**3.** The vehicle having an adjustable wheel base according to claim 2, **characterized in that** said operating links are disposed on the outside of said main frame in the transverse direction so as to avoid said main frame in the transverse direction when said pair of sub-links are connected together, and at the same time, said operating links are joined together in the transverse direction of the vehicle at the portion where said sub-links are connected together by said operating portion of said operating apparatus.

**4.** The vehicle having an adjustable wheel base according to claim 2 and claim 3, **characterized in that** said operating portion of said operating apparatus is configured by a male screw member that is threaded on the outer circumferential surface and that is rotated by an electric motor, and a female screw member that has said male screw member threaded in said female screw member, that is connected to said operating links so as to be unable to rotate, and that moves linearly on said male screw member due to said male screw member rotating.

**5.** The vehicle having an adjustable wheel base according to any one of claim 1 to claim 4, **characterized in that** the lower ends of upper arms and the upper ends of lower arms are rotatably connected together, and subsequently the upper ends of said upper arms are connected to locations of said main frame that are positioned farther toward the rear than the locations of said main frame that are joined to said rotating arms, the lower ends of said lower arms are connected to said rear wheels, and one of said upper arms and lower arms is rotatably connected to said main frame or said rear wheels.
